# DEMANDE DE BREVET EUROPEEN

(11) **EP 3 806 112 A1**
(43) Date de publication de la demande: **14.04.2021**
(21) Numéro de dépôt: 20199658.4
(22) Date de dépôt: 01.10.2020
(51) Int. Cl.: H01B 3/02, H01B 3/44, H01B 17/56, H02G 15/18

(54) **ACCESSOIRE POUR CÂBLE À RIGIDITÉ DIÉLECTRIQUE AMÉLIORÉE**

(30) Priorité: 10.10.2019 FR 1911286
(71) Demandeur: Nexans, 92400 Courbevoie (FR)
(72) Inventeur: MALHEURTY, Laureene, 71000 MACON (FR); SESSOUC, François, 62100 CALAIS (FR); MARTRES, Christophe, 69310 PIERRE-BENITE (FR)
(74) Mandataire: Ipsilon

(57) **Abrégé**

La présente invention concerne un accessoire pour câble, ledit accessoire comprenant au moins une couche électriquement isolante comprenant au moins un matériau polymère, et au moins 4% en volume de nitrure de bore par rapport au volume total de la couche électriquement isolante, et un procédé de fabrication dudit accessoire.

## Description

La présente invention concerne un accessoire pour câble, ledit accessoire comprenant au moins une couche électriquement isolante comprenant au moins un matériau polymère, et au moins 4% en volume de nitrure de bore, par rapport au volume total de la couche électriquement isolante, et un procédé de fabrication dudit accessoire.

L'invention s'applique typiquement mais non exclusivement au domaine des câbles d'énergie à haute tension (notamment supérieure à 60 kV), et en particulier au domaine des accessoires pour câbles tels que des jonctions de câble, notamment des jonctions de câble haute tension en courant continu ou alternatif (également bien connues sous l'anglicisme « *HVDC joint* » pour « *high voltage direct current joint* » ou « *HVAC joint* » pour « *high voltage alternative current joint* »)*.*

Le problème de surchauffe dans les jonctions de câble est bien connu. Il se traduit par une élévation de la température entre le câble et le point le plus chaud de la jonction dudit câble. Cela peut avoir des conséquences multiples telles que la dégradation des couches polymères sous-jacentes, des risques de claquage et/ou une panne électrique. Ce phénomène est d'autant plus important lorsque le ou les polymères employés dans la jonction ont une conductivité thermique faible (e.g. de l'ordre de 0,3 W/m.K). Toutefois, remplacer de tels polymères par d'autres polymères ayant une conductivité thermique plus élevée ne permet généralement pas de conserver des propriétés mécaniques et rhéologiques suffisantes pour fournir un accessoire de câble.

De la demande de brevet CN105542397 est connue une couche isolante pour une jonction de câble comprenant 100 parties en poids d'une résine époxyde, 20-30 parties en poids d'un polychlorure de vinyle chloré, 5-10 parties en poids de fibres de verre exemptes de bore et de métal alcalin, 5-10 parties en poids d'une poudre d'amiante, 5-10 parties en poids d'une résine furanique, 4-8 parties en poids d'une résine amine, 10-20 parties en poids de carbure de silicium, 10-15 parties en poids d'oxyde de zinc, 15-25 parties en poids d'une résine silicone, 5-10 parties en poids d'alumine, 5-15 parties en poids d'un isocyanate, 0,3-0,5 parties en poids d'un antioxydant, et 1-2 parties en poids d'un agent colorant. Une telle solution n'est pas satisfaisante pour obtenir une jonction présentant de bonnes propriétés de rigidité diélectrique, tout en garantissant de bonnes propriétés mécaniques et de conductivité thermique.

Le but de l'invention est donc de pallier les inconvénients de l'art antérieur en proposant un accessoire pour câble présentant de bonnes propriétés électriques, notamment en termes de rigidité diélectrique, tout en garantissant de bonnes propriétés mécaniques, notamment en termes d'allongement à la rupture et de résistance à la rupture, et/ou de bonnes propriétés rhéologiques, et/ou une bonne conductivité thermique.

Un autre but de l'invention est de fournir un procédé simple, économique, facile à mettre en œuvre, et permettant de conduire à un accessoire pour câble ayant les propriétés susmentionnées.

La présente invention a pour premier objet un accessoire pour câble électrique, caractérisé en ce que ledit accessoire comprend au moins une couche électriquement isolante comprenant au moins un matériau polymère, et au moins 4% en volume environ de nitrure de bore par rapport au volume total de la couche électriquement isolante.

Grâce à la combinaison du matériau polymère, et du nitrure de bore ayant une proportion minimale de 4% en volume par rapport au volume total de la couche électriquement isolante, l'accessoire de l'invention présente de bonnes propriétés électriques notamment en termes de rigidité diélectrique, tout en garantissant une bonne conductivité thermique, induisant une meilleure évacuation de la chaleur générée au sein de l'accessoire, de bonnes propriétés mécaniques, notamment en termes d'allongement à la rupture et de résistance à la rupture, et de bonnes propriétés rhéologiques, facilitant sa mise en œuvre.

Dans l'invention, l'expression « accessoire pour câble » signifie un accessoire destiné à être relié à un câble.

La couche électriquement isolante peut comprendre au moins 4,5% en volume environ de nitrure de bore, de préférence au moins 5% en volume environ de nitrure de bore, de façon particulièrement préférée au moins 7% en volume environ de nitrure de bore, et de façon plus particulièrement préférée au moins 9% en volume environ de nitrure de bore, par rapport au volume total de la couche électriquement isolante. Cela permet ainsi d'obtenir une conductivité thermique suffisante, tout en garantissant de bonnes propriétés mécaniques, rhéologiques et/ou de rigidité diélectrique.

Selon une forme de réalisation de l'invention, la couche électriquement isolante comprend au moins 8% en poids environ de nitrure de bore, de préférence au moins 10% en poids environ de nitrure de bore, et de façon particulièrement préférée au moins 15% en poids environ de nitrure de bore, par rapport au poids total de la couche électriquement isolante. Cela permet ainsi d'obtenir une conductivité thermique suffisante, tout en garantissant de bonnes propriétés mécaniques, rhéologiques et/ou de rigidité diélectrique.

Selon une forme de réalisation préférée de l'invention, la couche électriquement isolante comprend au plus 40% en volume environ de nitrure de bore, de préférence au plus 30% en volume environ de nitrure de bore, et de façon particulièrement préférée au plus 20% en volume environ de nitrure de bore, par rapport au volume total de la couche électriquement isolante. Cela permet ainsi d'obtenir de bonnes propriétés mécaniques, rhéologiques et/ou de rigidité diélectrique, tout en garantissant une conductivité thermique suffisante.

Le nitrure de bore peut être sous la forme de particules individuelles, sous la forme d'agrégats de particules, ou sous la forme d'un mélange de particules individuelles et d'agrégats de particules.

Un mélange de particules individuelles et d'agrégats de particules est particulièrement préféré. Cela permet ainsi d'obtenir un meilleur réseau pour la conduction thermique et d'améliorer les propriétés mécaniques.

Le nitrure de bore de la couche électriquement isolante peut être sous la forme de particules micrométriques ou nanométriques.

Dans l'invention, l'expression « particules micrométriques » signifie que les particules ont une dimension supérieure ou égale à 1 µm environ.

Dans l'invention, l'expression « particules sub-micrométriques » signifie que les particules ont une dimension supérieure ou égale à 100 nm et inférieure à 1 µm environ.

Dans l'invention, l'expression « particules nanométriques » signifie que les particules ont une dimension inférieure à 100 nm environ.

En considérant plusieurs particules de nitrure de bore selon l'invention, le terme « dimension » représente la distribution volumique de tailles Dv50, cette distribution étant classiquement déterminée par des méthodes bien connues de l'homme du métier.

La dimension de la ou des particules selon l'invention peut être par exemple déterminée par microscopie, notamment par microscope électronique à balayage (MEB) ou par microscope électronique transmission (MET), ou par diffraction laser, et de préférence par diffraction laser.

Selon un mode de réalisation particulier, le nitrure de bore de la couche électriquement isolante présente une distribution volumique de tailles Dv50 d'au plus 20 µm environ, de préférence d'au plus 10 µm environ, de façon particulièrement préférée allant de 100 nm à 5 µm environ, et de façon plus particulièrement préférée allant de 500 nm à 2 µm environ. Grâce à une telle distribution volumique de tailles, on obtient de bonnes propriétés mécaniques, notamment on diminue le risque de déchirement de la couche électriquement isolante.

La distribution des tailles Dv50 est de préférence mesurée par diffraction laser, par exemple à l'aide d'un granulomètre à diffraction de rayon laser. La distribution des tailles Dv50 indique que 50% en volume de la population des particules a un diamètre de sphère équivalente inférieure à la valeur donnée.

Selon un mode de réalisation préféré, le nitrure de bore de la couche électriquement isolante présente une distribution volumique de tailles Dv90 d'au plus 30 µm environ, de préférence d'au plus 20 µm environ, de façon particulièrement préférée d'au plus 10 µm environ.

Selon un mode de réalisation préféré de l'invention, la couche électriquement isolante comprend des particules de nitrure de bore d'au moins deux dimensions différentes, par exemple des particules de nitrure de bore micrométriques et sub-micrométriques, des particules de nitrure de bore micrométriques de deux dimensions différentes, des particules de nitrure de bore sub-micrométriques de deux dimensions différentes, des particules de nitrure de bore micrométriques et nanométriques, ou des particules de nitrure de bore sub-micrométriques et nanométriques. Cela permet ainsi de former un réseau de particules plus compact, de favoriser de nombreux chemins de conduction, et ainsi d'améliorer la conductivité thermique de la couche électriquement isolante.

Lorsque la couche électriquement isolante comprend des particules de nitrure de bore de deux dimensions différentes, on parle de distribution de taille bimodale.

Le nitrure de bore peut être amorphe ou cristallin, et de préférence cristallin.

Selon une forme de réalisation préférée de l'invention, le nitrure de bore est hexagonal. Le nitrure de bore a alors une structure en feuillets capable de conduire les phonons, et ainsi de favoriser la conduction thermique. Par ailleurs, cette forme cristalline a l'avantage d'être stable à température ambiante, d'être faiblement abrasive, et d'avoir des propriétés de lubrification.

Le nitrure de bore de la couche électriquement isolante a de préférence une conductivité thermique intrinsèque supérieure à 20 W/m.K environ, de façon particulièrement préférée supérieure à 30 W/m.K environ, et de façon plus particulièrement préférée supérieure à 50 W/m.K environ.

Le nitrure de bore de la couche électriquement isolante a de préférence une résistivité volumique supérieure à 10⁸ Ohm.cm environ, et de façon particulièrement préférée supérieure à 10¹² Ohm.cm environ, mesurée à 25°C en courant continu.

Le nitrure de bore de la couche électriquement isolante peut être « traité » ou « non traité ».

Dans l'invention, on entend par « nitrure de bore traité », du nitrure de bore ayant subi un traitement de surface, ou en d'autres termes, du nitrure de bore traité en surface. Ledit traitement de surface permet notamment de modifier les propriétés de surface du nitrure de bore, par exemple pour améliorer la compatibilité du nitrure de bore avec le matériau polymère.

Lorsque le nitrure de bore est du nitrure de bore « traité », il peut être du nitrure de bore silanisé, ou en d'autres termes du nitrure de bore ayant été traité pour obtenir du nitrure de bore silanisé. D'autres nitrures de bore traités différents du nitrure de bore silanisé peuvent également être utilisés.

Le traitement de surface utilisé pour obtenir du nitrure de bore silanisé est notamment un traitement de surface à partir d'au moins un composé silane (avec ou sans agent de couplage), ce type de traitement de surface étant bien connu de l'homme du métier.

Ainsi, le nitrure de bore silanisé peut comprendre à sa surface des groupements siloxane et/ou silane. Lesdits groupements peuvent être du type vinylsilane, alkylsilane, époxysilane, méthacryloxysilane, acryloxysilane, aminosilane ou mercaptosilane.

Le composé silane utilisé pour obtenir du nitrure de bore silanisé peut être choisi parmi :
- des alkyltriméthoxysilane, des alkyltriéthoxysilane, tels que par exemple l'octadecyltriméthoxysilane (OdTMS - C18), l'octyl(triéthoxy)silane (OTES - C8), le méthyl triméthoxysilane, l'hexadécyl triméthoxysilane, le 3-aminopropyl triéthoxysilane (AMEO),
- des vinyltriméthoxysilane (VTMO), des vinyltriéthoxysilane,
- des méthacryloxysilane ; des acryloxysilane, tels que par exemple le 3-méthacryloxypropyl méthyldiméthoxysilane, le 3-méthacryloxypropyl triméthoxysilane, le 3-méthacryloxypropyl triméthoxysilane, le 3-acryloxypropyl triméthoxysilane, et
- un de leurs mélanges.

Avant la silanisation, le nitrure de bore peut avantageusement subir un pré-traitement de fonctionnalisation avec des groupes hydroxyles. Cela permet ainsi de faciliter la silanisation. Un tel pré-traitement peut mettre en œuvre de la soude, un plasma, ou une thermooxydation à très haute température. Ces procédés de pré-traitement sont généralement agressifs et sont bien connus de l'homme du métier.

Dans un mode de réalisation préféré, le nitrure de bore est « non traité ». En effet, un traitement n'est pas requis pour obtenir les propriétés susmentionnées.

Le matériau polymère de la couche électriquement isolante peut comprendre un ou plusieurs polymère(s), le terme « polymère » pouvant s'entendre comme tout type de polymère bien connu de l'homme du métier tel qu'un homopolymère ou un copolymère (e.g. copolymère séquencé, copolymère statistique, terpolymère, etc...).

La couche électriquement isolante peut comprendre au moins 30% en poids environ, et de préférence au moins 45% en poids environ de matériau polymère, par rapport au poids total de la couche électriquement isolante.

Avantageusement, la couche électriquement isolante comprend au plus 80% en poids environ, et de préférence au plus 60% en poids environ de matériau polymère, par rapport au poids total de la couche électriquement isolante.

Le matériau polymère peut être un matériau thermoplastique et/ou un matériau élastomère, et de préférence un matériau élastomère.

Dans l'invention l'expression « matériau élastomère » signifie un matériau qui présente des propriétés élastiques, obtenues après réticulation, et/ou qui présente une température de transition vitreuse inférieure à la température ambiante (i.e. inférieure à 25°C).

Selon une forme de réalisation préférée de l'invention, le matériau polymère comprend au moins un polymère d'oléfine.

Le polymère d'oléfine est de préférence un polymère d'éthylène, de façon particulièrement préféré un copolymère d'éthylène, et de façon plus particulièrement préférée un copolymère d'éthylène et de propylène.

Le polymère d'oléfine peut représenter au moins 50% en poids environ, de préférence au moins 80% en poids environ, de façon particulièrement préférée au moins 90% en poids environ, et de façon plus particulièrement préféré 100% environ, par rapport au poids total du matériau polymère.

Selon une forme de réalisation particulièrement préférée de l'invention, le matériau polymère comprend ou est constitué d'un élastomère d'éthylène tel que le trimère d'éthylène-propylène-diène (EPDM) ou le dimère d'éthylène-propylène (EPR).

Grâce à la combinaison d'un matériau élastomère, notamment d'un élastomère d'éthylène, et du nitrure de bore ayant une proportion minimale de 4% en volume environ, par rapport au volume total de la couche électriquement isolante, l'accessoire de l'invention présente de très bonnes propriétés électriques notamment en termes de rigidité diélectrique, tout en garantissant une bonne conductivité thermique, induisant une meilleure évacuation de la chaleur générée au sein de l'accessoire, de bonnes propriétés mécaniques, notamment en termes d'allongement à la rupture et de résistance à la rupture, et de bonnes propriétés rhéologiques, facilitant sa mise en œuvre.

L'EPDM peut comprendre de 0,1 à 8% en poids environ de diène, tel que de l'éthylidène norbornène, par rapport au poids total de l'EPDM.

L'EPDM (respectivement l'EPR) peut comprendre au moins 40% en poids environ d'éthylène, et de préférence au moins 50% en poids environ d'éthylène, par rapport au poids total de l'EPDM (respectivement par rapport au poids total de l'EPR).

Selon une forme de réalisation particulièrement préférée de l'invention, le matériau polymère, et notamment le matériau élastomère, est réticulé. En effet, la réticulation permet d'obtenir un matériau polymère ayant des propriétés de résistance à la rupture suffisantes tout en conservant une certaine élasticité.

Le matériau polymère de la couche électriquement isolante ne comprend pas de préférence de polyorganosiloxane(s).

La couche électriquement isolante peut comprendre en outre au moins une charge inorganique.

La couche électriquement isolante peut comprendre de 0,1 à 40% en volume environ de charge inorganique, et de préférence de 5 à 10% en volume environ de charge inorganique, par rapport au volume total de la couche électriquement isolante.

La charge inorganique peut être choisie parmi les charges inorganiques électriquement isolantes, de préférence ayant une conductivité thermique intrinsèque supérieure à 5 W/m.K environ, de façon particulièrement préférée supérieure à 20 W/m.K environ, et de façon plus particulièrement préférée supérieure à 30 W/m.K environ.

Dans l'invention, on entend par « charge électriquement isolante » une charge dont la résistivité volumique peut être supérieure à 10⁷ Ohm.cm environ, de préférence supérieure à 10¹⁰ Ohm.cm environ, et de façon particulièrement préférée supérieure à 10¹² Ohm.cm environ, mesurée à 25°C en courant continu.

De telles charges sont par exemple de l'oxyde de zinc, l'alumine, le nitrure d'aluminium, la silice, le dioxyde de titane, les aluminosilicates tels que les kaolins ou les kaolins calcinés, ou l'oxyde de magnésium.

L'oxyde de zinc et les kaolins calcinés sont préférés.

La charge inorganique peut être sous la forme de particules micrométriques ou nanométriques.

La charge inorganique peut avantageusement être traitée en surface, notamment par silanisation. Cela permet ainsi d'augmenter sa compatibilité avec le matériau polymère ou pour se lier avec le matériau polymère.

Selon un mode de réalisation particulier, la charge inorganique de la couche électriquement isolante présente une distribution volumique de tailles Dv50 d'au plus 10 µm environ, et de préférence allant de 500 nm à 5 µm environ.

Selon un mode de réalisation préféré de l'invention, la couche électriquement isolante comprend des particules de nitrure de bore d'une dimension, par exemple des particules de nitrure de bore micrométriques (respectivement sub-micrométriques), et des particules de charge inorganique d'une autre dimension, par exemple sub-micrométriques (respectivement micrométriques). Cela permet ainsi d'améliorer la conductivité thermique.

Selon une forme de réalisation préférée de l'invention, les particules de charge inorganique sont sous la forme sphérique.

L'association de particules de nitrure de bore hexagonal et de particules sphériques de charge inorganique améliore encore la conductivité thermique de la couche électriquement isolante.

La couche électriquement isolante peut comprendre en outre au moins un additif, notamment choisi parmi des agents favorisant la mise en œuvre tels que des lubrifiants, des agents compatibilisants, des agents de couplage, des composés réduisant les arborescences d'eau, des pigments, des charges minérales sans halogène destinées à améliorer le comportement au feu de la couche électriquement isolante, des antioxydants, et un de leurs mélanges.

La couche électriquement isolante peut par exemple comprendre de 1 à 30% en poids environ d'additif(s), et de préférence de 5 à 20% en poids environ d'additif(s), par rapport au poids total de la couche électriquement isolante.

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de façon particulièrement préférée d'au plus 1.10⁻¹⁰ S/m (siemens par mètre), mesurée à 25°C en courant continu.

La couche électriquement isolante de l'accessoire de l'invention est une couche de l'accessoire. En d'autres termes, la couche électriquement isolante fait partie intégrante de l'accessoire pour câble en tant que tel. Elle est par conséquent une couche dépendante de l'accessoire. En d'autres termes, elle ne peut pas être séparée de l'accessoire pour câble sans causer de dommage mécanique et/ou électrique audit accessoire pour câble, et notamment sans causer de dommage aux autres éléments de l'accessoire pour câble.

La couche électriquement isolante est de préférence une couche réticulée. Cela permet ainsi d'obtenir de bonnes propriétés mécaniques notamment en termes d'allongement à la rupture et de résistance à la rupture, et de bonnes propriétés rhéologiques.

La couche peut être réticulée par des techniques bien connues de l'homme du métier.

La couche électriquement isolante peut avantageusement avoir une épaisseur variable. Elle peut être une enveloppe continue, notamment formée d'une seule pièce.

Avantageusement, la couche électriquement isolante est une couche non poreuse.

La couche électriquement isolante de l'accessoire de l'invention peut avoir une conductivité thermique d'au moins 0,35 W/m.K, de préférence d'au moins 0,40 W/m.K, de façon particulièrement préférée d'au moins 0,45 W/m.K, et de façon plus particulièrement préférée d'au moins 0,50 W/m.K, mesurée à 60°C.

La conductivité thermique de la couche électriquement isolante peut être mesurée à l'aide d'un appareil vendu sous la dénomination commerciale Hot Disk TPS 2500S, par la société Hot Disk, par exemple à 60°C.

Grâce à une bonne conductivité thermique de la couche électriquement isolante, l'évacuation de la chaleur générée au niveau de l'accessoire est facilitée, sans toutefois dégrader les propriétés électriques et mécaniques de l'accessoire.

La couche électriquement isolante de l'accessoire de l'invention peut avoir une résistance à la rupture d'au moins 4,5 N/mm² environ, et de préférence d'au moins 5 N/mm² environ, mesurée à 25°C.

La résistance à la rupture de la couche électriquement isolante peut être mesurée à l'aide d'un appareil vendu sous la dénomination commerciale Z010 par la société Zwick, par exemple selon la norme CEI 60811-1-1.

La couche électriquement isolante de l'accessoire de l'invention peut avoir un allongement à la rupture d'au moins 300 % environ, et de préférence d'au moins 400 % environ, mesurée à 25°C.

L'allongement à la rupture de la couche électriquement isolante peut être mesurée à l'aide d'un appareil vendu sous la dénomination commerciale Z010 par la société Zwick, par exemple selon la norme CEI 60811-1-1.

La couche électriquement isolante de l'accessoire de l'invention peut avoir une rigidité diélectrique d'au moins 30 kV/mm environ, et de préférence d'au moins 40 kV/mm environ, mesurée à 25°C en courant alternatif.

La couche électriquement isolante de l'accessoire de l'invention peut avoir une rigidité diélectrique d'au moins 160 kV/mm environ, et de préférence d'au moins 170 kV/mm environ, mesurée à 25°C en courant continu.

La rigidité diélectrique correspond au paramètre nommé α donnant la tension de claquage pour une probabilité de 63% dans la représentation statistique de type Weibull.

La rigidité diélectrique en courant alternatif de la couche électriquement isolante peut être mesurée à l'aide d'un appareil vendu sous la dénomination commerciale DTA, par la société Baur, de préférence selon la norme ASTM D877.

La rigidité diélectrique en courant continu de la couche électriquement isolante peut être mesurée à l'aide d'un appareil vendu sous la dénomination commerciale PRF50, par la société Sefelec.

La couche électriquement isolante de l'accessoire de l'invention peut être obtenue à partir d'une composition polymère comprenant le nitrure de bore, et au moins ledit matériau polymère ou un de ses précurseurs.

La composition polymère peut comprendre de 4 à 40% en volume environ du nitrure de bore, de préférence de 5 à 30% en volume environ du nitrure de bore, et de façon particulièrement préférée de 9 à 20% en volume environ du nitrure de bore, par rapport au volume total de la composition polymère.

La composition polymère peut comprendre de 30 à 80% en poids environ du matériau polymère ou d'un de ses précurseurs, et de préférence de 45 à 60% en poids environ du matériau polymère ou d'un de ses précurseurs, par rapport au poids total de la composition polymère.

Le précurseur dudit matériau polymère peut être choisi un polymère d'oléfine.

Selon une forme de réalisation préférée de l'invention, le précurseur dudit matériau polymère est un élastomère d'oléfine, et de façon plus particulièrement préférée un élastomère d'éthylène.

La composition polymère peut être une composition polymère réticulable.

La composition polymère réticulable selon l'invention peut comprendre un agent de réticulation tel que par exemple un peroxyde organique.

Dans un mode de réalisation particulier, le peroxyde organique utilisable selon l'invention est un peroxyde di-tertiaire d'alkyle ou d'aralkyle, de préférence choisi parmi le peroxyde de di-ter-butyle, le peroxyde de 2,4-dichlorobenzoyle (DCBP), le peroxyde de di(ter-butylperoxyisopropyl)benzène, le peroxyde de dicumyle, et le 2,5-diméthyl-2,5-di(ter-butylperoxy)hexane (DBPH).

La quantité de peroxyde organique au sein de la composition polymère réticulable peut aller de 0,1 à 5% en poids environ, par rapport au poids total de la composition polymère réticulable.

Dans la présente invention, la composition polymère réticulable permettant d'obtenir la couche électriquement isolante réticulée peut être par exemple caractérisée par ses propriétés rhéologiques.

Plus particulièrement, la composition polymère réticulable peut être facilement caractérisée par la détermination de la densité de réticulation donnée par la valeur mesurée de M_{H}-M_{L} selon la norme ISO 6502 (2018). Cette valeur est exprimée en dN.m et représente la différence de couple mesurée par le disque oscillant avant et après formation complète du réseau de réticulation.

La densité de réticulation M_{H}-M_{L} (en dN.m) peut par exemple être mesurée à l'aide d'un rhéomètre à disque oscillant (connu sous l'anglicisme « Moving Die Rheometer (MDR) »), notamment vendu sous la dénomination commerciale MDR2000, par la société Alpha Technologies.

Plus particulièrement, ladite composition polymère réticulable peut avoir avantageusement une valeur de M_{H}-M_{L} d'au moins 2,0, de préférence d'au moins 3,0, de préférence d'au moins 4,0, et de façon particulièrement préférée d'au moins 5,0.

La couche électriquement isolante de l'invention est de préférence une couche interne de l'accessoire.

Selon l'invention, on entend par « couche interne », une couche qui ne constitue pas la couche la plus externe de l'accessoire pour câble.

En d'autres termes, la couche électriquement isolante de l'invention est de préférence entourée ou recouverte, au moins en partie, par une autre couche de l'accessoire.

L'accessoire pour câble électrique est de préférence destiné à entourer au moins une partie ou extrémité d'un câble électrique.

L'accessoire comporte de préférence en outre au moins un élément semi-conducteur, la couche électriquement isolante et l'élément semi-conducteur étant de préférence destinés à entourer au moins une partie ou extrémité d'un câble électrique.

L'élément semi-conducteur est bien connu pour contrôler la géométrie du champ électrique, lorsque le câble électrique, destiné à être associé audit accessoire, est sous tension.

L'élément semi-conducteur entoure de préférence au moins une partie de ladite couche électrique isolante.

L'accessoire peut être typiquement un corps longitudinal creux, tel que par exemple une jonction pour câble électrique ou une terminaison pour câble électrique.

Selon une forme de réalisation préférée de l'invention, l'accessoire pour câble est une jonction.

La jonction permet en particulier de connecter ensemble deux câbles électriques, la jonction étant destinée à entourer au moins une partie ou extrémité de ces deux câbles électriques.

Selon une forme de réalisation particulièrement préférée de l'invention, l'accessoire est une jonction de câble électrique comprenant :
- un premier élément semi-conducteur, de préférence entourant une partie ou extrémité des deux câbles électriques,
- une couche électriquement isolante, de préférence entourant une partie ou extrémité des deux câbles électriques, et
- un deuxième élément semi-conducteur, de préférence entourant une partie ou extrémité des deux câbles électriques,
la couche électriquement isolante étant telle que définie dans l'invention.

Le premier élément semi-conducteur et le second élément semi-conducteur sont de préférence séparés par la couche électriquement isolante.

La jonction peut en outre comprendre une ou plusieurs couches de bourrage entourant le deuxième élément semi-conducteur.

La jonction peut en outre comprendre un troisième élément semi-conducteur, notamment entourant la couche électriquement isolante.

La jonction peut en outre comprendre une couche d'un matériau auto-amalgamant entourant le troisième élément semi-conducteur, ladite couche d'un matériau auto-amalgamant étant préférentiellement entourée d'un tricot de cuivre, notamment fixé à ladite couche au moyen d'un ruban de polychlorure de vinyle (PVC).

Selon une forme de réalisation particulièrement préférée de l'invention, la jonction de câble comprend :
- un premier élément semi-conducteur,
- un second élément semi-conducteur, et
- une couche électriquement isolante telle que définie dans l'invention,
lesdits premier et second éléments semi-conducteurs étant séparés par la couche électriquement isolante,
lesdits éléments semi-conducteurs et ladite couche électriquement isolante étant destinés à entourer les extrémités respectivement de deux câbles électriques à connecter,
la couche électriquement isolante entourant le premier élément semi-conducteur, et
le second élément semi-conducteur entourant une partie seulement de la couche électriquement isolante.

Dans la présente invention, on entend par « élément semi-conducteur » un élément dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C en courant continu.

L'invention a pour deuxième objet un dispositif électrique comprenant :
- au moins un câble électrique, et
- un accessoire entourant au moins une partie ou extrémité dudit câble électrique,
caractérisé en ce que l'accessoire est tel que défini dans le premier objet de l'invention.

Le câble électrique peut être un câble terrestre, enterré ou sous-marin.

La couche électriquement isolante entoure avantageusement au moins une partie ou extrémité dudit câble électrique.

Le câble électrique peut comprendre au moins un élément électriquement conducteur allongé, et au moins une couche polymère ou une couche électriquement isolante, ladite couche polymère ou couche électriquement isolante entourant l'élément électriquement conducteur allongé.

L'élément électriquement conducteur allongé du câble électrique peut être un fil métallique (monobrin) ou une pluralité de fils métalliques (multibrins), torsadé(s) ou non, notamment en cuivre ou en aluminium, ou en un de leurs alliages.

Le câble électrique est de préférence un câble électrique haute tension (notamment supérieure à 60 kV).

Plus particulièrement, le câble électrique du dispositif peut comprendre :
- un élément électriquement conducteur allongé,
- une première couche semi-conductrice entourant l'élément électriquement conducteur allongé,
- une couche électriquement isolante entourant la première couche semi-conductrice, et
- une deuxième couche semi-conductrice entourant la couche électriquement isolante.

La deuxième couche semi-conductrice peut être entourée par un écran métallique de mise à la terre et/ou de protection.

La deuxième couche semi-conductrice peut être entourée par une gaine extérieure de protection, cette gaine extérieure de protection entourant l'écran métallique lorsqu'il existe.

Le câble électrique peut comprendre en outre entre l'élément électriquement conducteur allongé et la première couche semi-conductrice, un ou plusieurs rubans, notamment qui permettant de rassembler les brins de l'élément électriquement conducteur allongé lorsqu'il est multibrins.

Le câble électrique peut comprendre en outre une ou plusieurs couches gonflantes, de préférence sous la forme de ruban(s) entre la deuxième couche semi-conductrice et l'écran métallique lorsqu'il existe et/ou entre l'écran métallique et la gaine extérieure lorsqu'ils existent. Ces couches gonflantes permettant d'assurer l'étanchéité longitudinale du câble électrique à l'eau.

Lorsque l'accessoire est une jonction, le dispositif électrique peut comprendre en outre un deuxième câble électrique, notamment tel que défini dans l'invention. La jonction permet alors de connecter ensemble les deux câbles électriques.

Selon un mode de réalisation particulier, la jonction entoure au moins une partie ou extrémité de chacun desdits câbles électriques. Plus particulièrement, l'extrémité de chaque câble destiné à être connecté est positionnée à l'intérieur de ladite jonction.

Selon ce mode de réalisation, la couche électriquement isolante de la jonction peut entourer au moins une partie ou extrémité de chacun desdits câbles électriques, notamment au niveau de la jonction.

Un troisième objet de l'invention concerne un procédé de fabrication d'un accessoire pour câble électrique conforme au premier objet de l'invention, caractérisé en ce qu'il comprend au moins les étapes suivantes :
- une étape i) de préparation d'une composition polymère comprenant le nitrure de bore et au moins ledit matériau polymère ou un de ses précurseurs, et
- une étape ii) de mise en forme de la composition polymère pour obtenir la couche électriquement isolante.

La composition polymère, le nitrure de bore, le précurseur dudit matériau polymère, ledit matériau polymère, et la couche électriquement isolante sont telles que définis dans l'invention.

L'étape i) peut être effectuée en mélangeant le précurseur du matériau polymère avec le nitrure de bore, et éventuellement la charge inorganique et l'additif, par exemple dans un mélangeur.

L'étape i) est de préférence effectuée à une température allant de 80 à 120°C environ.

L'étape ii) peut comprendre les sous-étapes suivantes :
- une sous-étape ii-1) d'extrusion de la composition polymère, de préférence à une température allant de 50 à 100°C environ, par exemple pour former une bande, et
- une sous-étape ii-2) de moulage injection, et de préférence à une température allant de 50 à 100°C environ, par exemple à l'aide d'une presse à injecter.

Le procédé peut comprendre en outre une étape iii) de réticulation, de préférence réalisée à une température allant de 150 à 200°C environ.

Dans la présente invention, la température de réticulation et le temps de réticulation de la couche électriquement isolante mis en œuvre sont notamment fonctions de l'épaisseur de la couche, du nombre de couches, ...etc.

L'homme du métier pourra facilement déterminer ces paramètres en suivant l'évolution de la réticulation grâce à la détermination des propriétés rhéologiques pour obtenir une couche électriquement isolante réticulée.

Il est préférable que la réticulation iii) commence après les étapes i) et ii), notamment pour faciliter l'étape ii).

L'accessoire fabriqué dans ledit procédé est de préférence une jonction.

Généralement, pour former la jonction, la couche électriquement isolante est surmoulée sur l'insert semi-conducteur préalablement moulé.

D'autres caractéristiques et avantages de la présente invention apparaîtront à la lumière de la description d'un exemple non limitatif d'un dispositif selon l'invention fait en référence aux figures.

### Brève description des dessins

Les dessins annexés illustrent l'invention.
La figure 1 représente un dispositif 101 comprenant une jonction 20 conforme à l'invention entourant en partie deux câbles électriques 10a et 10b.
La figure 2 représente une courbe de la rigidité diélectrique de couches électriquement isolantes conformes et non conforme à l'invention.

Pour des raisons de clarté, seuls les éléments essentiels pour la compréhension de l'invention ont été représentés de manière schématique, et ceci sans respect de l'échelle.

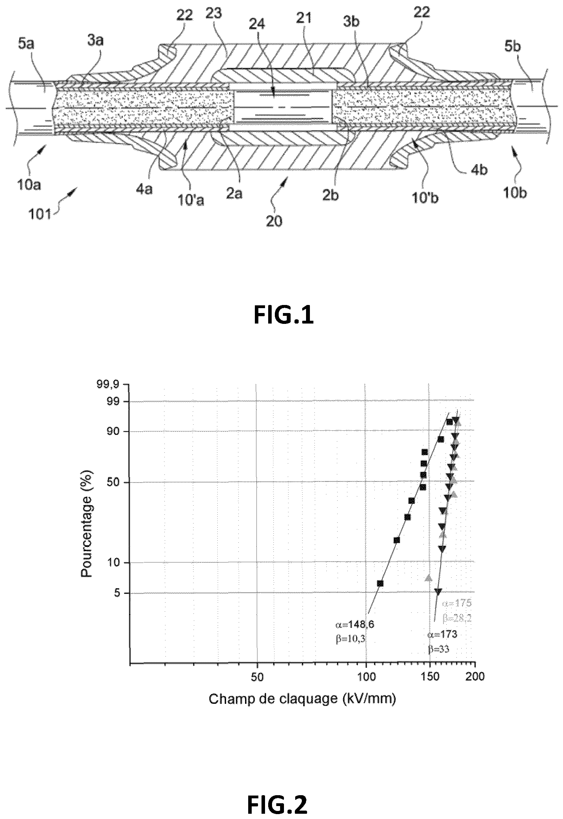

Sur la figure 1, les câbles électriques 10a et 10b comprennent respectivement une extrémité 10'a et 10'b, destinées à être connectées électriquement et entourées par la jonction 20.

Le corps de la jonction 20 comporte un premier élément semi-conducteur 21 et un second élément semi-conducteur 22, séparés par une couche électriquement isolante 23, lesdits éléments semi-conducteur 21, 22 et ladite couche électriquement isolante 23 entourent les extrémités 10'a et 10'b respectivement des câbles électriques 10a et 10b. La couche électriquement isolante 23 entoure le premier élément semi-conducteur, et comprend au moins un matériau élastomère de type EPDM et au moins 4% en volume de nitrure de bore, par rapport au volume total de la couche électriquement isolante.

Le premier câble électrique 10a comprend un élément électriquement conducteur allongé 2a, une première couche semi-conductrice 3a entourant l'élément électriquement conducteur allongé 2a, une couche électriquement isolante 4a entourant la première couche semi-conductrice 3a, et une seconde couche semi-conductrice 5a entourant la couche électriquement isolante 4a.

Le second câble électrique 10b comprend un élément électriquement conducteur allongé 2b, une première couche semi-conductrice 3b entourant l'élément électriquement conducteur allongé 2b, une couche électriquement isolante 4b entourant la première couche semi-conductrice 3b, et une seconde couche semi-conductrice 5b entourant la couche électriquement isolante 4b.

Les éléments électriquement conducteurs allongés 2a et 2b respectivement du premier câble électrique 10a et du second câble électrique 10b sont soudés à leurs extrémités 10'a et 10'b au niveau de la zone 24, de manière à connecter électriquement lesdits câbles.

La seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

À l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

### Exemples : fabrication de couches électriquement isolantes d'un accessoire pour câble tel que défini dans l'invention

Du nitrure de bore a été mélangé à de l'EPDM, un système de réticulation, et des additifs pour former une composition polymère réticulable. La composition a été mélangée à l'aide d'un mélangeur interne de type Brabender.

Puis, la composition polymère réticulable résultante a ensuite été mise sous la forme d'une plaque à l'aide d'un bi-cylindres pour calandrer ladite plaque à 1 mm d'épaisseur environ.

La plaque ainsi obtenue a été réticulée pendant environ 10 min à 180°C pour obtenir une couche électriquement isolante réticulée **C1, C2** ou **C3** conforme à l'invention.

À titre comparatif, une couche électriquement isolante réticulée **CA** sans nitrure de bore a été préparée selon le même procédé que celui utilisé pour les couches **C1, C2** et **C3.** La couche réticulée **CA** ne fait donc pas partie de l'invention.

La conductivité thermique (CT) (en W/m.K) d'un échantillon de chacune des couches réticulées **C1, C2** et **C3** de dimensions : 45 m x 45 m x 8 mm, et celle d'un échantillon de couche réticulée **CA** de même dimension, a été mesurée à l'aide d'un appareil vendu sous la dénomination commerciale TP 2500S, par la société Hot Disk, à environ 60°C.

L'allongement à la rupture (ER) (en %) desdits échantillons a été mesurée à l'aide d'un appareil vendu sous la dénomination commerciale Z010 par la société Zwick, à environ 25°C.

La tension à la rupture (TR) (en N/mm²) desdits échantillons a été mesurée à l'aide d'un appareil vendu sous la dénomination commerciale Z010, par la société Zwick, à environ 25°C, et à une vitesse de 250 mm/min.

La densité de réticulation M_{H}-M_{L} des compositions (en dN.m), a été mesurée à l'aide d'un rhéomètre à disque oscillant (connu sous l'anglicisme « Moving Die Rheometer (MDR) ») vendu sous la dénomination commerciale MDR2000, par la société Alpha Technologies. La réticulation de la composition polymère a été suivie par le rhéomètre pendant 30 min à 180°C avec une oscillation de 0,5°.

La densité de réticulation est donnée par la valeur mesurée de M_{H}-M_{L} selon la norme ISO 6502 (2018). Cette valeur est exprimée en dN.m et représente la différence de couple mesurée par le disque oscillant avant et après formation complète du réseau de réticulation dans la composition polymère. Plus le réseau tridimensionnel formé est dense lors de la réticulation, plus la valeur de M_{H}-M_{L} est élevée.

La valeur de la rigidité diélectrique des couches a été mesurée à l'aide d'un appareil vendu sous la dénomination commerciale PRF50 par la société Sefelec.

Le tableau 1 ci-dessous illustre les proportions (en poids) des différents ingrédients présents dans les compositions : Composition **1**, Composition **2,** Composition **3** et Composition **A,** qui ont permis d'obtenir respectivement les couches **C1, C2, C3** et **CA.**

**TABLEAU 1**

| | Composition **A**(*) | Composition **1** | Composition **2** | Composition **3** |
|---|---|---|---|---|
| EPDM | 100 | 100 | 100 | 100 |
| Nitrure de bore | 0 | 39,1 | 57,1 | 57,9 |
| Charge inorganique 1 | 70 | 0 | 0 | 0 |
| Charge inorganique 2 | 0 | 22,3 | 0 | 0 |
| additifs | 25 | 27 | 27 | 27 |
| Système de réticulation | 2,1 | 2,1 | 2,1 | 2,1 |
| Total | 197,1 | 190,5 | 186,2 | 187,0 |

| | | | | |
|---|---|---|---|---|
| (*) Composition comparative ne faisant pas partie de l'invention | | | | |

L'origine des composés du tableau 1 est la suivante :
- EPDM : trimère d'éthylène propylène diène comprenant 50% en poids d'éthylène, un taux moyen de 5-éthylidène-2-norbornène (ENB) de 5± 1% en poids, et une viscosité Mooney ML (1 + 4) à 125 °C de 25 unités Mooney (i.e. MU) ;
- nitrure de bore sous la forme de particules individuelles ayant une Dv50 de 1,5 µm pour les compositions **1** et **2,**
- mélange de nitrure de bore comprenant 37,8 parties en poids de nitrure de bore sous la forme de particules individuelles ayant une Dv50 de 1,5 µm ; et 20,1 parties en en poids de nitrure de bore sous la forme de particules individuelles ayant une dimension de 70 nm par mesure optique pour la composition **3** ;
- charge inorganique 1 : 65 parties en poids de kaolin calciné silanisé et 5 parties en poids d'oxyde de zinc, pour 100 parties en poids d'EPDM ;
- charge inorganique 2 : 20,7 parties en poids de kaolin calciné silanisé et 1,6 parties en poids d'oxyde de zinc, pour 100 parties en poids d'EPDM ;
- additifs : 20 parties en poids d'une huile paraffinique ; 4 parties en poids d'agents de mise en œuvre (masterbatch de stéarate de zinc et d'une cire polyéthylène) ; 2 parties en poids d'un alkyl-alkoxysiloxane ; et 1 partie en poids d'un antioxydant de type TMQ, pour 100 parties en poids d'EPDM ;
- système de réticulation : 0,5 partie en poids de triallylcyanurate et 1,6 partie en poids de peroxyde de dicumyle.

Le tableau 2 ci-dessous illustre les différentes propriétés des couches obtenues **C1, C2, C3** et **CA.**

**TABLEAU 2**

| | **CA**(*) | **C1** | **C2** | **C3** |
|---|---|---|---|---|
| ER | 420 | 542 | 608 | 530 |
| TR | 5,9 | 5,9 | 5,3 | 5,0 |
| CT | 0,28 | 0,40 | 0,43 | 0,45 |
| M_{H}-M_{L} | 7,1 | 6,8 | 6,8 | 7,68 |
| Rigidité diélectrique (AC) | 37,7 | 44,6 | 46,5 | 40,4 |
| Rigidité diélectrique (DC) [α ; β] | [148,6 ; 10,3] | [173,3 ; 33,0] | [175,0 ; 28,2] | [161,0 ; 10,2] |

| | | | | |
|---|---|---|---|---|
| (*) Composition comparative ne faisant pas partie de l'invention | | | | |

Les couches **C1, C2** et **C3** présentent une conductivité thermique améliorée par rapport à celle de la couche **CA,** tout en garantissant de bonnes propriétés mécaniques et rhéologiques.

La figure 2 est une représentation statistique de type Weibull décrivant la probabilité de claquage de la couche (en %) en fonction du champ électrique appliqué (en kV/mm), pour un échantillon de couche **CA** selon l'invention (courbe avec les carrés), pour un échantillon de couche **C1** (courbe avec les triangles pointés vers le bas), et pour un échantillon de couche **C2** (courbe avec les triangles pointés vers le haut).

On détermine deux paramètres nommés α et β donnant respectivement la tension de claquage en courant continu pour une probabilité de 63% et le facteur de forme décrivant la dispersion des résultats. Plus α et β sont élevés, respectivement, meilleure est la tenue électrique et moins importante est la dispersion des résultats.

D'après la figure 2, une augmentation importante de la rigidité diélectrique est obtenue avec les couches de l'invention **C1** et **C2.**

Une augmentation de la rigidité diélectrique est également observée avec la composition de la couche **C3.** La couche **C3** présente une densité de réticulation plus élevée, à volume de charge égale, que celles des couches **CA, C1** et **C2.** Les nitrures de bore utilisés permettent d'obtenir un maillage plus serré du réseau de charges, favorisant la conductivité thermique. La plus haute valeur de conductivité thermique est trouvée pour la composition **3** due à la particularité du réseau formé par les charges nanométriques et micrométriques.

## Revendications

1. Accessoire (20) pour câble électrique (10a, 10b), **caractérisé en ce que** ledit accessoire (20) comprend au moins une couche électriquement isolante (23) comprenant au moins un matériau polymère, et au moins 4% en volume de nitrure de bore par rapport au volume total de la couche électriquement isolante.

2. Accessoire (20) selon la revendication 1, **caractérisé en ce que** le nitrure de bore est sous la forme d'un mélange de particules individuelles et d'agrégats de particules.

3. Accessoire (20) selon la revendication 1 ou 2, **caractérisé en ce que** le nitrure de bore de la couche électriquement isolante (23) présente une distribution volumique de tailles Dv50 d'au plus 20 µm.

4. Accessoire (20) selon l'une quelconque des revendications précédentes, **caractérisé en ce que** la couche électriquement isolante (23) comprend des particules de nitrure de bore d'au moins deux dimensions différentes.

5. Accessoire (20) selon l'une quelconque des revendications précédentes, **caractérisé en ce que** la couche électriquement isolante (23) comprend des particules de nitrure de bore micrométriques et sub-micrométriques.

6. Accessoire (20) selon l'une quelconque des revendications précédentes, **caractérisé en ce que** le nitrure de bore est non traité.

7. Accessoire (20) selon l'une quelconque des revendications précédentes, **caractérisé en ce que** la couche électriquement isolante (23) comprend au moins 30% en poids de matériau polymère, par rapport au poids total de la couche électriquement isolante (23).

8. Accessoire (20) selon l'une quelconque des revendications précédentes, **caractérisé en ce que** le matériau polymère est un matériau élastomère.

9. Accessoire (20) selon l'une quelconque des revendications précédentes, **caractérisé en ce que** le matériau polymère comprend au moins un polymère d'oléfine.

10. Accessoire (20) selon l'une quelconque des revendications précédentes, **caractérisé en ce que** la couche électriquement isolante (23) comprend en outre au moins une charge inorganique.

11. Accessoire (20) selon l'une quelconque des revendications précédentes, **caractérisé en ce que** la couche électriquement isolante (23) est une couche réticulée.

12. Accessoire (20) selon l'une quelconque des revendications précédentes, **caractérisé en ce que** la couche électriquement isolante (23) a une rigidité diélectrique d'au moins 160 kV/mm, mesurée à 25°C en courant continu.

13. Accessoire (20) selon l'une quelconque des revendications précédentes, **caractérisé en ce que** la couche électriquement isolante (23) est une couche interne de l'accessoire (20).

14. Accessoire (20) selon l'une quelconque des revendications précédentes, **caractérisé en ce que** ledit accessoire (20) est une jonction de câble électrique comprenant :
- un premier élément semi-conducteur (21),
- une couche électriquement isolante (23), et
- un deuxième élément semi-conducteur (22),
la couche électriquement isolante (23) étant telle que définie à l'une quelconque des revendications précédentes.

15. Dispositif électrique (101) comprenant :
- au moins un câble électrique (10a, 10b), et
- un accessoire (20) entourant au moins une partie ou extrémité dudit câble électrique (10a, 10b),
**caractérisé en ce que** l'accessoire (20) est tel que défini à l'une quelconque des revendications précédentes.

16. Procédé de fabrication d'un accessoire (20) tel que défini à l'une quelconque des revendications 1 à 14, **caractérisé en ce qu'**il comprend au moins les étapes suivantes :
- une étape i) de préparation d'une composition polymère comprenant le nitrure de bore, et au moins ledit matériau polymère ou un de ses précurseurs, et
- une étape ii) de mise en forme de la composition polymère pour obtenir la couche électriquement isolante (23).
